# FASCICULE DE BREVET EUROPEEN

(11) **EP 0 604 251 B1**
(45) Date de publication et mention de la délivrance du brevet: **05.03.1997**
(21) Numéro de dépôt: 93402855.6
(22) Date de dépôt: 24.11.1993
(51) Int. Cl.: F16D 65/56

(54) **Dispositif de commande d'un dispositif de rattrapage de jeu pour frein à tambour**
Antriebseinrichtung für die Spielnachstellung einer Trommelbremse
Driving device for the backlash compensation of a drum brake

(30) Priorité: 23.12.1992 FR 9215645
(43) Date de publication de la demande: 29.06.1994
(73) Titulaire: AUTOMOBILES PEUGEOT, 75116 Paris (FR); AUTOMOBILES CITROEN, 92200 Neuilly-sur-Seine (FR)
(72) Inventeur: Fernandez, Roberto, F-95360 Montmagny (FR); Boudinot, Pierre, F-78420 Carrieres sur Seine (FR)
(74) Mandataire: Polus, Camille

(56) Documents cités:
- GB-A- 966 076
- US-A- 3 184 008

## Description

La présente invention concerne un dispositif de commande d'un dispositif de rattrapage de jeu pour frein à tambour.

De façon classique, un frein à tambour pour véhicule automobile comprend un tambour, solidaire d'une roue du véhicule, et un plateau, solidaire d'un essieu du véhicule, formant support pour deux mâchoires munies de garnitures destinées à coopérer par frottement avec la surface interne du tambour lorsque le frein est actionné.

Lorsque le frein est au repos, il existe un jeu entre les garnitures des mâchoires et la surface interne de frottement du tambour.

Ce jeu ayant tendance à augmenter à mesure que l'usure des garnitures s'accentue, il est connu d'équiper le frein à tambour d'un dispositif de rattrapage de jeu.

On connaît déjà dans l'état de la technique un dispositif de commande d'un dispositif de rattrapage de jeu pour frein à tambour, du type comprenant un levier d'actionnement du dispositif de rattrapage de jeu, porté par une première mâchoire du frein, un câble relié par une première extrémité à ce levier et par une seconde extrémité à la seconde mâchoire du frein, et un organe de renvoi du câble porté par la première mâchoire.

Un tel dispositif de commande est décrit par exemple dans US-3 184 008.

De façon classique, le levier d'actionnement comprend des moyens élastiques de rappel en position de repos permettant de maintenir le câble tendu.

L'invention a pour but le réglage précis de la position initiale du levier et de la tension initiale du câble, ceci avec des moyens simples et faciles à mettre en oeuvre.

A cet effet l'invention a pour objet un dispositif de commande d'un dispositif de rattrapage de jeu pour frein à tambour, du type précité, caractérisé en ce que l'organe de renvoi est accroché sur la première mâchoire par emboîtement d'un plot, porté par l'un de ces deux éléments, dans un orifice complémentaire, ménagé dans l'autre de ces deux éléments, le plot et l'orifice complémentaire comportant des moyens de positionnement angulaire relatif, l'organe de renvoi comportant un guide courbe d'enroulement du câble, de centre de courbure excentré par rapport à l'axe du plot ou de l'orifice complémentaire, de manière que la tension du câble soit fonction de la position angulaire du plot dans l'orifice complémentaire.

Suivant d'autres caractéristiques de l'invention:
- les moyens de positionnement angulaire relatif comportent des surfaces cannelées complémentaires délimitant respectivement les contours du plot et de l'orifice complémentaire ;
- le plot d'accrochage est porté par l'organe de renvoi ;
- l'organe de renvoi comporte un disque, d'axe excentré par rapport à l'axe du plot ou de l'orifice complémentaire, le guide d'enroulement du câble s'étendant autour du contour de ce disque.

Suivant différents modes de réalisation de l'organe de renvoi du câble :
- le disque est solidaire du plot ;
- l'organe de renvoi comporte un support, solidaire du plot, le disque étant monté à rotation sur ce support ;
- le guide d'enroulement du câble est délimité par une gorge annulaire ménagée dans le contour du disque;
- le guide d'enroulement du câble est en appui sur une surface périphérique du disque, sous l'effet de la tension du câble, par l'intermédiaire d'un organe de liaison de forme complémentaire à cette surface périphérique d'appui, solidaire du guide ;
- le guide d'enroulement du câble est immobilisé en rotation par collage de l'organe de liaison sur la surface périphérique d'appui, après fixation de l'organe de renvoi sur la première mâchoire ;
- le guide d'enroulement du câble comporte une saillie destinée à être emboîtée dans un évidement d'immobilisation en rotation du guide, ménagé dans la première mâchoire ;
- la face opposée au plot du disque comporte des surfaces d'accrochage d'un outil de positionnement de l'organe de renvoi.

Des exemples de réalisation de l'invention seront décrits ci-dessous en se référant aux dessins annexés dans lesquels :
- la figure 1 est une vue de face d'un frein à tambour comportant un dispositif, selon l'invention, de commande d'un dispositif de rattrapage de jeu ;
- la figure 2 est une vue à échelle agrandie, en perspective, d'un organe de renvoi du câble selon un premier mode de réalisation de l'invention ;
- la figure 3 est une vue en coupe, suivant un plan axial du plot d'accrochage, d'un organe de renvoi du câble selon un second mode de réalisation de l'invention;
- la figure 4 est une vue de face d'un organe de renvoi du câble selon un troisième mode de réalisation de l'invention ;
- la figure 5 est une vue en coupe suivant la figure 5-5 de la figure 4 ;
- la figure 6 est une vue de face du guide d'enroulement du câble de l'organe de renvoi de la figure 4 ;
- la figure 7 est une vue similaire à la figure 4 d'un organe de renvoi du câble selon un quatrième mode de réalisation de l'invention.

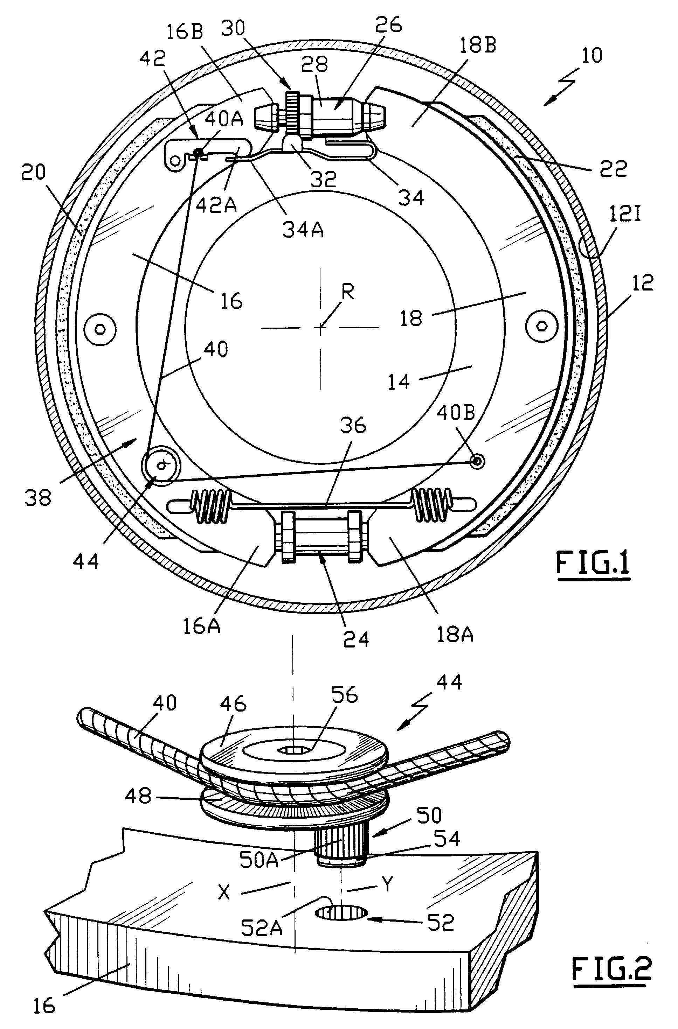

On a représenté à la figure 1 un frein à tambour pour véhicule automobile, désigné par la référence générale 10, comportant, de façon classique, un tambour 12, solidaire d'une roue du véhicule, et un plateau 14 solidaire d'un essieu du véhicule. Ce plateau 14 forme un support pour deux mâchoires 16,18 munies de garnitures 20,22 destinées à coopérer par frottement avec la surface interne 12I du tambour 12 lorsque le frein est actionné.

Un cylindre 24 d'écartement des mâchoires 16,18, de type connu, est interposé entre deux extrémités 16A,18A en vis-à-vis des mâchoires 16,18.

Un dispositif 26 de rattrapage de jeu est interposé entre les deux autres extrémités 16B,18B en vis-à-vis des mâchoires 16,18.

De façon classique, ce dispositif 26 comprend une entretoise 28, de longueur variable, reliée par ses extrémités aux mâchoires 16,18, et une roue à rochet 30 de réglage de la longueur de l'entretoise 28, entraînée par un cliquet 32 porté par une lame-ressort 34. Cette lame 34 est fixée par une de ses extrémités à l'entretoise 28.

Un ressort 36, relié par ses extrémités aux deux mâchoires 16,18, sollicite élastiquement ces dernières l'une vers l'autre.

On a également représenté sur la figure 1, un dispositif 38, selon l'invention, de commande du dispositif de rattrapage de jeu 26.

Ce dispositif 38 comporte un câble 40 relié par une première extrémité 40A à un levier 42 d'actionnement du dispositif 26 de rattrapage de jeu, articulé sur une première mâchoire 16, et par une seconde extrémité 40B à la seconde mâchoire 18.

Un organe de renvoi 44, selon un premier mode de réalisation, est porté par la première mâchoire 16 et coopère avec la partie médiane du câble 40 de manière à former deux brins de câble sensiblement perpendiculaires.

L'extrémité libre 42A du levier 42 est destinée à coopérer avec l'extrémité libre 34A de la lame-ressort 34 de manière à actionner le cliquet 32 d'entraînement de la roue à rochet 30 par déplacement du levier 42.

La lame-ressort 34 permet d'une part de solliciter élastiquement le levier 42 vers une position de repos, et d'autre part de maintenir tendu le câble 40.

En se référant à la figure 2, dans laquelle l'organe de renvoi 44 est montré plus en détail, on voit que ce dernier comporte un disque 46, d'axe X, muni d'une gorge annulaire 48, ménagée dans son contour, formant guide d'enroulement du câble 40.

L'organe de renvoi 44 comporte de plus un plot d'accrochage 50, solidaire du disque 46, d'axe Y excentré par rapport à l'axe X de ce disque 46.

Le plot 50 est destiné à être emboîté dans un orifice complémentaire 52 ménagé dans la première mâchoire 16.

Les contours du plot 50 et de l'orifice complémentaire 52 sont délimités respectivement par des surfaces complémentaires cannelées 50A,52A formant des moyens de positionnement angulaire relatif.

L'extrémité libre du plot 50 est délimitée par une surface de centrage 54 facilitant le positionnement et l'emboîtement du plot 50 dans l'orifice complémentaire 52.

On a également représenté sur la figure 2, un évidement 56, ménagé dans la face du disque 46 opposée au plot 50, délimitée par des surfaces d'accrochage d'un outil, de type connu, de positionnement de l'organe de renvoi 44 sur la mâchoire 16.

Le guide courbe 48 d'enroulement du câble 40 a un centre de courbure excentré par rapport à l'axe Y du plot de manière que la tension du câble est fonction de la position angulaire du plot 50 dans l'orifice complémentaire 52.

Le réglage de la tension initiale du câble 40 et de la position initiale du levier 42 se fait de la façon suivante.

Dans un premier temps, on place le plot 50 au droit de l'orifice 52 d'emboîtement, l'axe X du disque 46 étant disposé le plus près possible de l'axe R de rotation du tambour 12, cet axe R étant représenté par une croix sur la figure 1, puis on engage le câble 40 dans le guide courbe 48. Dans cette position de l'organe de renvoi 44, la tension du câble 40 est minimale.

Ensuite, on fait tourner l'organe de renvoi 44 autour de l'axe Y du plot 50, par exemple au moyen d'un outil accroché dans l'évidement 56, de manière à obtenir une tension du câble 40 adaptée pour le fonctionnement du dispositif 26 de rattrapage de jeu.

Lorsque la tension du câble 40 est réglée, on emboîte le plot 50 dans l'orifice complémentaire 52, ce plot 50 étant immobilisé en rotation par coopération des surfaces cannelées 50A,52A.

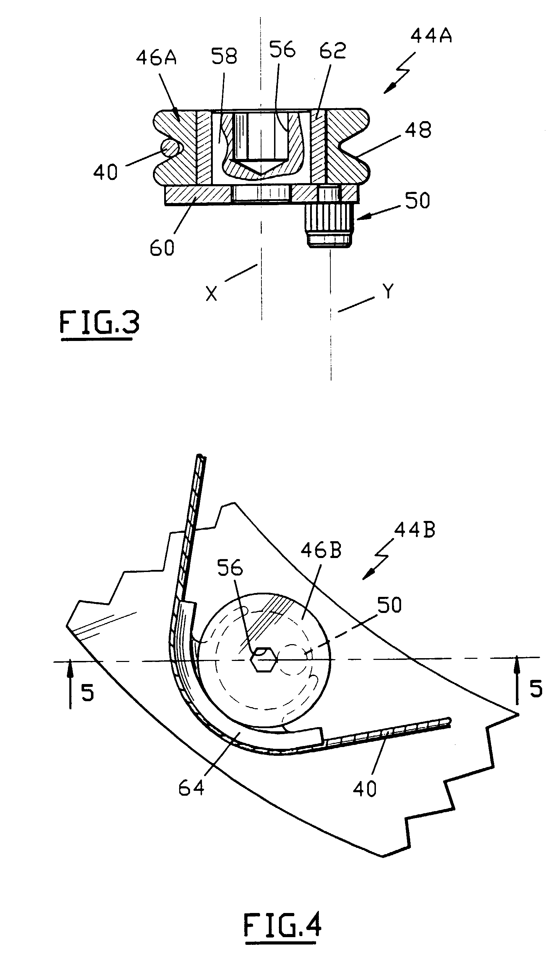

Sur la figure 3, on a représenté un organe 44A de renvoi de câble selon un second mode de réalisation.

Les éléments analogues à ceux de l'organe 44 de renvoi selon le premier mode de réalisation sont désignés par des références identiques.

Dans ce cas, le disque 46A est monté à rotation autour d'un pivot 58 porté par un support 60 solidaire du plot 50. Par ailleurs, l'évidement 56 d'accrochage d'outil est ménagé dans l'extrémité libre du pivot 58.

De préférence, un manchon 62, fabriqué dans un matériau de coefficient de frottement faible, est interposé entre le pivot 58 et le disque 46A.

La mise en place sur la mâchoire 16 de l'organe de renvoi 44A selon le second mode de réalisation se fait de façon analogue au premier mode de réalisation.

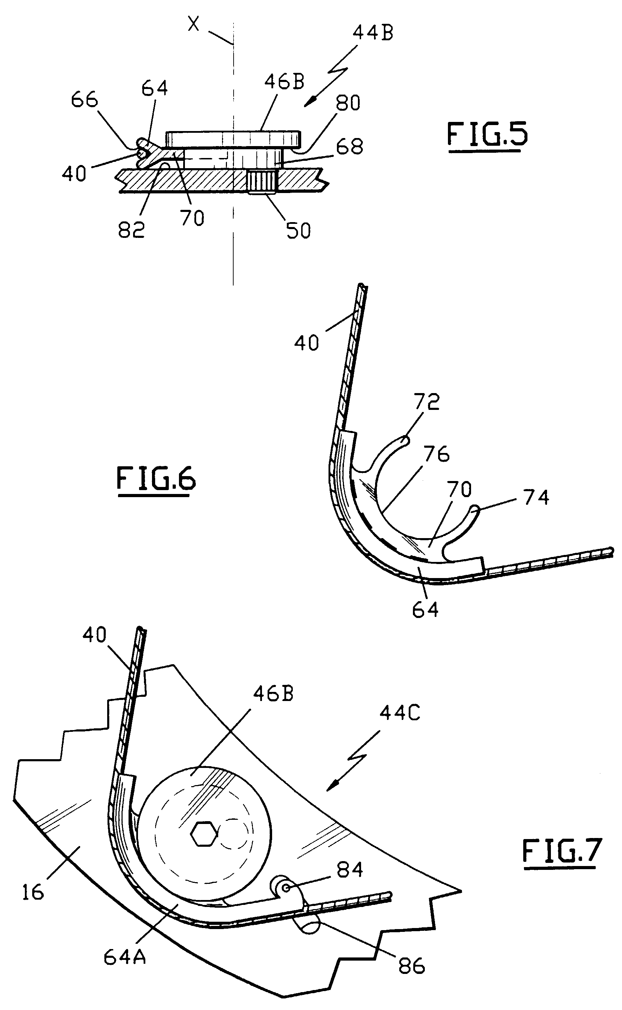

Sur les figures 4 et 5, on a représenté un organe 44B de renvoi de câble selon un troisième mode de réalisation.

Les éléments analogues à ceux des organes de renvoi précédemment décrits sont désignés par des références identiques.

Dans ce cas, le disque 46B est solidaire du plot d'accrochage 50.

L'organe 44B de renvoi comporte de plus un guide 64 délimitant une gorge courbe 66 d'enroulement du câble 40, s'étendant autour du contour du disque 46B de manière que le centre de courbure de la gorge 66 soit excentré par rapport à l'axe Y du plot 50.

Le guide 64 est en appui sur un décrochement 68 du contour du disque 46B, sous l'effet de la tension du câble 40, par l'intermédiaire d'un organe de liaison 70 de forme complémentaire, solidaire du guide 64.

En se référant à la figure 6, sur laquelle l'organe de liaison 70 est représenté plus en détail, on voit que ce dernier comporte deux branches 72,74 délimitant entre elles une surface d'appui circulaire 76, de forme complémentaire au décrochement 68, s'étendant de préférence sur plus de 180°.

L'organe de liaison 70 est fixé sur le guide 64 par des moyens connus, par exemple par soudage ou par collage.

En se référant à nouveau à la figure 5, on voit que le guide 64 est immobilisé suivant l'axe X du disque 46B par emboîtement entre l'épaulement 80 formé par le décrochement 68 et la face 82 de la mâchoire 16 en regard de cet épaulement 80.

L'immobilisation du guide 64 en rotation autour de l'axe X du disque 46B est assurée par l'adhérence des surfaces en appui mutuel du disque 46B et de l'organe de liaison 70. De préférence, l'organe de liaison 70 est collé sur le disque 46B après réglage de la position de l'organe de renvoi 44B et fixation de celui-ci sur la mâchoire 16.

Le guide 64 d'enroulement de câble a un rayon de courbure supérieur à celui des précédents modes de réalisation ce qui permet de réduire la flexion du câble et d'obtenir un meilleur rendement des déplacements de ce câble.

Par ailleurs, la mise en place sur la mâchoire 16 de l'organe de renvoi 44B se fait de façon analogue aux précédents modes de réalisation, après avoir interposé le guide 64 entre le câble 40 et le contour du disque 46B.

Sur la figure 7, on a représenté un organe 44C de renvoi de câble selon un quatrième mode de réalisation.

Dans ce cas, à la différence du troisième mode de réalisation, le guide 64A comporte une saillie 84 destinée à être emboîtée dans un évidement 86 d'immobilisation en rotation du guide, ménagé dans la mâchoire 16.

Au cours du réglage de la tension du câble 40, le guide 64A est immobilisé en rotation par emboîtement de la saillie 84 dans l'évidement 86 alors que le disque 46B peut être déplacé en rotation pour régler l'excentricité de l'organe de renvoi 44C.

L'invention ne se limite pas aux modes de réalisation décrits.

En particulier, l'organe de renvoi peut être accroché sur la mâchoire correspondante par emboîtement d'un plot solidaire de cette mâchoire dans un orifice complémentaire ménagé dans l'organe de renvoi.

Par ailleurs, les surfaces cannelées de positionnement angulaire relatif du plot d'accrochage et de l'orifice complémentaire peuvent être remplacées par des surfaces moletées ou des moyens équivalents.

L'invention comporte de nombreux avantages.

En particulier, elle permet de régler de façon simple et précise la position initiale du levier d'actionnement du dispositif de rattrapage de jeu ainsi que la tension initiale du câble de commande de ce levier.

## Revendications

1. Dispositif de commande d'un dispositif (26) de rattrapage de jeu pour frein à tambour (12), du type comprenant un levier (42) d'actionnement du dispositif (26) de rattrapage de jeu, porté par une première mâchoire (16) du frein, un câble (40) relié par une première extrémité (40A) à ce levier (42) et par une seconde extrémité (40B) à la seconde mâchoire (18) du frein, et un organe de renvoi (44;44A;44B;44C) du câble (40) porté par la première mâchoire (16), caractérisé en ce que l'organe de renvoi (44;44A;44B;44C) est accroché sur la première mâchoire (16) par emboîtement d'un plot (50), porté par l'un de ces deux éléments, dans un orifice complémentaire (52), ménagé dans l'autre de ces deux éléments, le plot (50) et l'orifice complémentaire (52) comportant des moyens de positionnement angulaire relatif (50A,52A), l'organe de renvoi (44;44A;44B;44C) comportant un guide courbe (48;64;64A) d'enroulement du câble (40), de centre de courbure excentré par rapport à l'axe (Y) du plot (50) ou de l'orifice complémentaire (52), de manière que la tension du câble (40) soit fonction de la position angulaire du plot (50) dans l'orifice complémentaire (52).

2. Dispositif selon la revendication 1, caractérisé en ce que les moyens de positionnement angulaire relatif comportent des surfaces cannelées complémentaires (50A,52A) délimitant respectivement les contours du plot (50) et de l'orifice complémentaire (52).

3. Dispositif selon la revendication 1 ou 2, caractérisé en ce que le plot (50) d'accrochage est porté par l'organe de renvoi (44;44A;44B;44C).

4. Dispositif selon l'une quelconque des revendications 1 à 3, caractérisé en ce que l'organe de renvoi (44;44A;44B;44C) comporte un disque (46;46A;46B), d'axe (X) excentré par rapport à l'axe (Y) du plot (50) ou de l'orifice complémentaire (52), le guide (48;64;64A) d'enroulement du câble s'étendant autour du contour de ce disque (46;46A;46B).

5. Dispositif selon les revendications 3 et 4 prises ensemble, caractérisé en ce que le disque (46;46B) est solidaire du plot (50).

6. Dispositif selon les revendications 3 et 4 prises ensemble, caractérisé en ce que l'organe de renvoi (44A) comporte un support (60), solidaire du plot (50), le disque (46A) étant monté à rotation sur ce support (60).

7. Dispositif selon l'une quelconque des revendications 4 à 6, caractérisé en ce que le guide d'enroulement du câble est délimité par une gorge annulaire (48) ménagée dans le contour du disque (46;46A).

8. Dispositif selon la revendication 5, caractérisé en ce que le guide (64;64A) d'enroulement du câble est en appui sur une surface périphérique (68) du disque (46B), sous l'effet de la tension du câble (40), par l'intermédiaire d'un organe de liaison (70) de forme complémentaire à cette surface périphérique d'appui (68), solidaire du guide (64;64A).

9. Dispositif selon la revendication 8, caractérisé en ce que le guide (64) d'enroulement du câble est immobilisé en rotation par collage de l'organe de liaison (70) sur la surface périphérique d'appui (68), après fixation de l'organe de renvoi (44B) sur la première mâchoire (16).

10. Dispositif selon la revendication 8, caractérisé en ce que le guide (64A) d'enroulement du câble comporte une saillie (84) destinée à être emboîtée dans un évidement (86) d'immobilisation en rotation du guide, ménagé dans la première mâchoire (16).

11. Dispositif selon l'une quelconque des revendications 4 à 10, caractérisé en ce que la face opposée au plot (50) du disque (46;46A;46B) comporte des surfaces d'accrochage (56) d'un outil de positionnement de l'organe de renvoi (44;44A;44B;44C).

## Patentansprüche

1. Antriebseinrichtung für eine Vorrichtung zur Spielnachstellung (26) für eine Trommelbremse (12), bestehend aus einem Hebel (42) für die Betätigung der Vorrichtung (26) zur Spielnachstellung, der von einem ersten Bremsklotz (16) der Bremse getragen wird, einem Kabel (40), das mit einem ersten Ende (40A) an diesem Hebel (42) befestigt ist, und mit einem zweiten Ende (40B) an dem zweiten Bremsklotz (18) der Bremse befestigt ist, und einem Umkehrorgan (44; 44A; 44B; 44C;) des Kabels (40), das von dem ersten Bremsklotz (16) getragen wird, dadurch gekennzeichnet, daß das Umkehrorgan (44; 44A; 44B; 44C;) an dem ersten Bremsklotz (16) durch Einsetzen eines Klotzes (50), der von einem dieser beiden Elemente getragen wird, in eine komplementäre Öffnung (52) befestigt ist, die in dem anderen der beiden Elemente ausgespart ist, wobei der Klotz (50) und die komplementäre Öffnung (52) Mittel zur relativen Winkelpositionierung (50A, 52A) umfassen und wobei das Umkehrorgan (44; 44A; 44B; 44C) eine gekrümmte Aufrollführung (48; 64; 64A) des Kabels (40) umfaßt, mit einem Krümmungsmittelpunkt, der in bezug auf die Achse (Y) des Klotzes (50) oder der Komplementäröffnung (52) außermittig angeordnet ist, sodaß die Kabelspannung (40) von der Winkelposition des Klotzes (50) in der Komplementäröffnung (52) abhängt.

2. Einrichtung nach Anspruch 1, dadurch gekennzeichnet, daß die Mittel zur relativen Winkelpositionierung gerillte Komplementärflächen (50A, 52A) umfassen, die die Konturen des Klotzes (50) und der Komplementäröffnung (52) begrenzen.

3. Einrichtung nach Anspruch 1 oder 2, dadurch gekennzeichnet, daß der Befestigungsklotz (50) von dem Umkehrorgan (44; 44A; 44B; 44C) getragen wird.

4. Einrichtung nach einem der Ansprüche 1 bis 3, dadurch gekennzeichnet, daß das Umkehrorgan (44; 44A; 44B; 44C) eine Scheibe (46; 46A; 46B) mit einer in bezug auf die Achse (Y) des Klotzes (50) oder der Komplementäröffnung (52) außermittig angeordneten Achse (X) umfaßt, wobei sich die Kabelaufrollführung (48; 64; 64A) um die Kontur dieser Scheibe (46; 46A; 46B) herum erstreckt.

5. Vorrichtung nach den Ansprüchen 3 und 4, dadurch gekennzeichnet, daß die Scheibe (46; 46B) mit dem Klotz (50) verbunden ist.

6. Vorrichtung nach den Ansprüchen 3 und 4, dadurch gekennzeichnet, daß das Umkehrorgan (44A) eine Stütze (60) umfaßt, die mit dem Klotz (50) verbunden ist, wobei die Scheibe (46A) drehbar auf dieser Stütze (60) montiert ist.

7. Vorrichtung nach einem der Ansprüche 4 bis 6, dadurch gekennzeichnet, daß die Aufrollführung des Kabels von einer Ringnut(48) begrenzt wird, die in der Kontur der Scheibe (46; 46A) ausgespart ist.

8. Vorrichtung nach Anspruch 5, dadurch gekennzeichnet, daß die Aufrollführung (64; 64A) des Kabels auf einer Peripheriefläche (68) der Scheibe (46B) unter der Wirkung der Kabelspannung (40) über ein Verbindungsorgan (70) aufliegt, das eine zu der Peripheriestützfläche (68), die mit der Führung (64; 64A) verbunden ist, komplementäre Form aufweist.

9. Vorrichtung nach Anspruch 8, dadurch gekennzeichnet, daß die Aufrollführung (64) des Kabels durch Kleben des Verbindungsorgans (70) auf die Peripheriestützfläche (68) nach der Befestigung des Umkehrorgans (44B) auf dem ersten Bremsklotz (16) hinsichtlich der Rotation festgesetzt wird.

10. Vorrichtung nach Anspruch 8, dadurch gekennzeichnet, daß die Aufrollführung (64A) des Kabels einen Vorsprung (84) umfaßt, der dazu bestimmt ist, in eine Aussparung (86) für die Festsetzung der Führung hinsichtlich der Rotation eingesetzt zu werden, die in dem ersten Bremsklotz (16) ausgespart ist.

11. Vorrichtung nach einem der Ansprüche 4 bis 10, dadurch gekennzeichnet, daß die Fläche der Scheibe (46; 46A; 46B), die dem Klotz (50) gegenüberliegt, Flächen für die Befestigung (56) eines Werkzeugs zur Positionierung des Umkehrorgans (44; 44A; 44B; 44C) umfaßt.

## Claims

1. A control device of a device (26) for clearance adjustment for a drum brake (12), of the kind comprising a lever (42) for operating the device (26) for clearance adjustment, and mounted on a first brake shoe (16), a cable (40) linked by a first end (40A) to this lever (42) and by a second end (40B) to the second brake shoe (18), and a returning member (44; 44A; 44B; 44C) of the cable (40) mounted on the first brake shoe (16), characterised in that the returning member (44; 44A; 44B; 44C) is engaged on the first brake shoe (16) by the encasement of a pin (50), mounted on one of these two members, in a complementary opening (52) formed in the second of these two members, the pin (50) and the complementary opening (52) comprising means (50A, 52A) for relative angular positioning, the returning member (44; 44A; 44B; 44C) comprising a curved guide (48; 64; 64A) - for winding the cable (40) - with a centre of curvature eccentric in relation to the axis (Y) of the pin (50) or of the complementary opening (52), in such a manner that the tension of the cable (40) depends on the angular position of the pin (50) in the complementary opening (52).

2. A device according to Claim 1, characterised in that the means for relative angular positioning comprise complementary grooved surfaces (50A, 52A) bounding the outlines of the pin (50) and the complementary opening (52) respectively.

3. A device according to Claim 1 or 2, characterised in that the engagement pin (50) is mounted on the returning member (44; 44A; 44B; 44C).

4. A device according to any one of Claims 1 to 3, characterised in that the returning member (44; 44A; 44B; 44C) comprises a disc (46; 46A; 46B), of axis (X) eccentric in relation to the axis (Y) of the pin (50) or of the complementary opening (52), the guide (48; 64; 64A) for winding the cable extending around the outline of this disc (46; 46A; 46B).

5. A device according to both Claims 3 and 4 taken together, characterised in that the disc (46; 46B) is integral with the pin (50).

6. A device according to both Claims 3 and 4 taken together, characterised in that the returning member (44A) comprises a support (60), integral with the pin (50), the disc (46A) being mounted so as to rotate on this support (60).

7. A device according to any one of Claims 4 to 6, characterised in that the guide for winding the cable is bounded by an annular groove (48) formed in the outline of the disc (46; 46A).

8. A device according to Claim 5, characterised in that the guide (64; 64A) for winding the cable is supported on a peripheral surface (68) of the disc (46B), under the action of the tension of the cable (40), by way of a linking member (70), complementary in shape to this peripheral support surface (68), integral with the guide (64; 64A).

9. A device according to Claim 8, characterised in that the guide (64) for winding the cable is immobilised in rotation by adhesion of the linking member (70) on the peripheral support surface (68), after fixing the returning member (44B) to the first brake shoe (16).

10. A device according to Claim 8, characterised in that the guide (64A) for winding the cable comprises a projection (84) for being encased in a recess (86) for immobilisation in rotation of the guide, which is formed in the first brake shoe (16).

11. A device according to any one of Claims 4 to 10, characterised in that the surface opposite the pin (50) of the disc (46; 46A; 46B) comprises engagement surfaces (56) for a tool for positioning the returning member (44; 44A; 44B; 44C).
